# EUROPEAN PATENT SPECIFICATION

(11) **EP 4 083 723 B1**
(45) Date of publication and mention of the grant of the patent: **21.08.2024**
(21) Application number: 22169725.3
(22) Date of filing: 25.04.2022
(51) Int. Cl.: G05B 19/042, G06Q 50/06, G06Q 10/06, G06Q 50/04

(54) **EVALUATION APPARATUS, EVALUATION METHOD, EVALUATION PROGRAM, AND CONTROL APPARATUS**
AUSWERTUNGSGERÄT, AUSWERTUNGSVERFAHREN, AUSWERTUNGSPROGRAMM UND STEUERGERÄT
APPAREIL D'ÉVALUATION, PROCÉDÉ D'ÉVALUATION, PROGRAMME D'ÉVALUATION ET APPAREIL DE COMMANDE

(30) Priority: 28.04.2021 JP 2021075455
(43) Date of publication of application: 02.11.2022
(73) Proprietor: Yokogawa Electric Corporation, Musashino-shi Tokyo 180-8750 (JP)
(72) Inventor: KARASAWA, Rei, Musashino-shi, Tokyo 180-8750 (JP); ENDO, Makoto, Musashino-shi, Tokyo 180-8750 (JP); MORIOKA, Nobuyuki, Musashino-shi, Tokyo 180-8750 (JP); TAKAMI, Go, Musashino-shi, Tokyo 180-8750 (JP); ISHII, Masaki, Musashino-shi, Tokyo 180-8750 (JP)
(74) Representative: Winter, Brandl - Partnerschaft mbB

(56) References cited:
- EP-A1- 1 271 366
- EP-A1- 2 682 914
- JP-A- 2012 038 054
- US-A1- 2016 281 607
- US-A1- 2017 309 094
- US-A1- 2019 164 102

## Description

### BACKGROUND

### 1. TECHNICAL FIELD

The present invention relates to an evaluation apparatus, an evaluation method, an evaluation program, and a control apparatus.

### 2. RELATED ART

Japanese Patent No. 4426243 describes "provides an energy saving effect quantity calculation method and an apparatus capable of enhancing reliability of an energy saving effect quantity".

The closest prior art document US 2019/164102 A1 describes an operational improvement effect calculation method, including: retrieving, from inputted plant operation data relating to operations of a plant, comparison target plant operation data which includes more than one plant operation data points similar to a plant operation indicated by evaluation target plant operation data which is plant operation data of an evaluation target; calculating a post-improvement evaluation indicator based on the evaluation target plant operation data and a pre-improvement evaluation indicator based on each of the comparison target plant operation data; calculating a confidence interval, based on each data point of the comparison target plant operation data; calculating a baseline.

JP 2012 038054 A discloses a plant operation evaluation device comprises: an estimated plant operation model which is created based on a second plant operation value relating to a plant operation before implementing energy conservation measures; plant operation estimation means to estimate a plant operation before implementing the energy conservation measures by applying a first plant operation value to the estimated plant operation model during a predetermined period after implementing the energy conservation measures; and evaluation means to evaluate the plant operation by comparing the plant operation before implementing the energy conservation measures estimated by the plant operation estimation means with the first plant operation value stored in a plant operation database.

EP 2 682 914 A1 discloses an energy management method using estimate models which correspond to each of a plurality of targets of energy management and which estimate energy consumption and/or energy conversion as the respective targets of energy management are activated. The estimate models are subdivided to correspond to each of a plurality of statuses of the targets of energy management, transitioning upon a temporal axis as the targets of energy management are activated.

US 2017/309094 A1 discloses a decision-support system for maintenance recommendation that uses analytics technology to evaluate the effectiveness of a maintenance action or a group of actions in improving the performance of equipment and its components, and provide recommendations on which maintenance actions or a group of maintenance actions should be pursued and which should be avoided.

EP 1 271 366 A1 discloses a system comprises a device installation supporting portion (NK1) for obtaining and displaying information about a model to be installed and installation timing in accordance with a device list concerning an energy conservation support device having energy conservation effect of reducing energy consumption, an energy conservation effect managing portion) for determining and displaying energy conservation effect record in accordance with a measured value of the energy consumption at home after installing the energy conservation support device.

US 2016/281607 A1 discloses a method for controlling and enhancing a startup operation for a combined cycle power block (block) having at least one gas turbine and at least one steam turbine, wherein operating parameters define performance and operational characteristics for the startup operation, the method comprising: receiving measured operating parameters from a plurality of reference blocks and, for each of the plurality of reference blocks, a plurality of types of the startup operations.

### SUMMARY

One aspect of the present invention is claimed in independent claim 1. A second aspect of the present invention is claimed in independent claim 8. A third aspect of the present invention is claimed in independent claim 9. A fourth aspect of the present invention is claimed in independent claim 10. A fifth aspect of the present invention is claimed in independent claim 13. The dependent claims are directed to preferred embodiments of the invention.

### BRIEF DESCRIPTION OF THE DRAWINGS

Fig. 1 shows an example of a block diagram of an evaluation apparatus 10 according to the present embodiment, together with a facility 20 provided with equipment 200 that is an evaluation target.
Fig. 2 shows an example of an evaluation flow in the evaluation apparatus 10 according to the present embodiment.
Fig. 3 shows an output example of an evaluation result in the evaluation apparatus 10 according to the present embodiment.
Fig. 4 shows another output example of the evaluation result in the evaluation apparatus 10 according to the present embodiment.
Fig. 5 shows an example of a block diagram of a control apparatus 500 according to the present embodiment.
Fig. 6 shows an example of a computer 9900 in which a plurality of aspects of the present invention may be entirely or partially embodied.

### DESCRIPTION OF EXEMPLARY EMBODIMENTS

Hereinafter, the present invention will be described through embodiments of the invention, but the following embodiments do not limit the invention according to the claims. In addition, not all combinations of features described in the embodiments are essential to the solution of the invention.

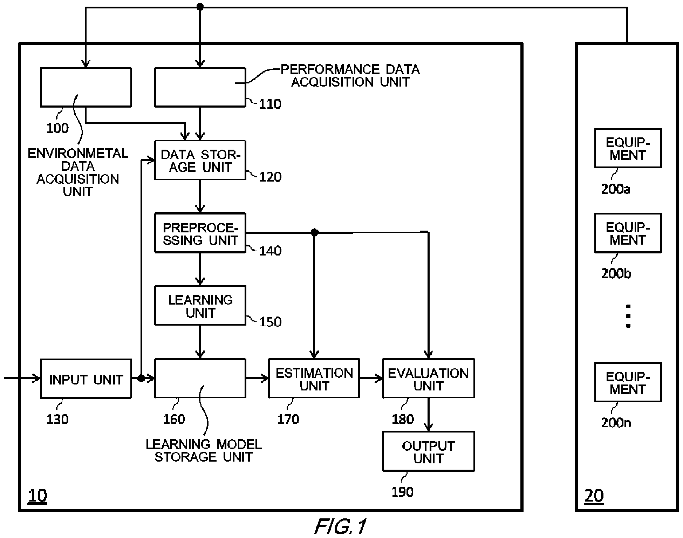

Fig. 1 shows an example of a block diagram of an evaluation apparatus 10 according to the present embodiment, together with a facility 20 provided with equipment 200 that is an evaluation target. The evaluation apparatus 10 according to the present embodiment is configured to estimate a performance on a past operation basis when a past environment is replaced with a same environment as that in an evaluation target period. The evaluation apparatus 10 is configured to relatively evaluate a performance actually measured in the evaluation target period with respect to the estimated performance on the past operation basis. As an example, the evaluation apparatus 10 according to the present embodiment is configured to evaluate a used amount of energy in the equipment 200, as the performance, thereby outputting an energy saving effect quantity in the equipment 200, as an evaluation result. Note that, as used herein, the term 'energy' is assumed to include an energy resource that becomes a source of generating energy, in addition to the energy itself.

The facility 20 is a building provided for a specific purpose or use. Such a facility 20 is equipped with various devices and the like for achieving various functions. The facility 20 may be, for example, a factory, an office building, a commercial building, a hospital, a school, a store, a hotel, or the like. From now on, a case where the facility 20 is a plant is described as an example. Examples of the plant may include a plant for managing and controlling well sites such as a gas field and an oil field and surroundings thereof, a plant for managing and controlling power generations such as hydroelectric, thermo electric and nuclear power generations, a plant for managing and controlling environmental power generation such as solar power and wind power, a plant for managing and controlling water and sewerage, a dam and the like, a semiconductor manufacturing plant for executing various manufacturing processes in manufacturing of a semiconductor, and the like, in addition to industrial plants such as chemical and bio industrial plants. As shown in the present drawing, the facility 20 is provided with, for example, n pieces of equipment 200 (n is an integer of 1 or greater) such as equipment 200a to 200n (collectively referred to as `equipment 200'). The evaluation apparatus 10 according to the present embodiment may set the n pieces of equipment 200 provided in such a facility 20 as an evaluation target.

The equipment 200 is a device (group) that is an evaluation target by the evaluation apparatus 10 according to the present embodiment. The equipment 200 may be, for example, air handling equipment, water supply/drainage equipment, electric power charging/supplying equipment, and the like. From now on, a case where the equipment 200 is air handling equipment provided in a plant is described as an example. That is, the evaluation apparatus 10 according to the present embodiment sets the air handling equipment provided in such a plant, as an evaluation target. However, the present invention is not limited thereto. The evaluation apparatus 10 according to the present embodiment may set the various pieces of equipment 200 provided in the various facilities 20, as an evaluation target. In particular, the evaluation apparatus 10 according to the present embodiment may set a device (group) whose operation performance has a strong correlation with an operation environment in the various facilities 20, as an evaluation target.

The evaluation apparatus 10 may also be a computer such as a PC (personal computer), a tablet-type computer, a smart phone, a workstation, a server computer or a general-purpose computer, or a computer system where a plurality of computers are connected. Such a computer system is also a computer in a broad sense. In addition, the evaluation apparatus 10 may also be implemented by one or more virtual computer environments that can be executed in the computer. Instead of this, the evaluation apparatus 10 may also be a dedicated computer designed for evaluation of an evaluation target or may also be dedicated hardware implemented by dedicated circuitry. Further, in a case where the evaluation apparatus 10 can connect to the Internet, the evaluation apparatus 10 may also be implemented by cloud computing.

The evaluation apparatus 10 includes an environmental data acquisition unit 100, a performance data acquisition unit 110, a data storage unit 120, an input unit 130, a preprocessing unit 140, a learning unit 150, a learning model storage unit 160, an estimation unit 170, an evaluation unit 180, and an output unit 190. Note that, these blocks are functional blocks that are each functionally separated, and may not be necessarily required to be matched with actual device configurations. That is, in the present drawing, a unit indicated by one block may not be necessarily required to be configured by one device. Also, in the present drawing, units indicated by separate blocks may not be necessarily required to be configured by separate devices.

The environmental data acquisition unit 100 is configured to acquire environmental data indicating an operation environment of the equipment 200. For example, the environmental data acquisition unit 100 may be configured to acquire data indicating an outside air condition, as the environmental data. In addition, the environmental data acquisition unit 100 may be configured to acquire data indicating an operational state in the facility 20 provided with the equipment 200, as the environmental data. The environmental data acquisition unit 100 is configured to acquire such environmental data from the facility 20 in real time, for example, via a network. However, the present invention is not limited thereto. The environmental data acquisition unit 100 may also be configured to acquire such environmental data in a batch unit via an operator or various memory devices. The environmental data acquisition unit 100 is configured to supply the acquired environmental data to the data storage unit 120.

The performance data acquisition unit 110 is configured to acquire performance data indicating an operation performance of the equipment 200. For example, the performance data acquisition unit 110 may be configured to acquire data, which indicates at least any of a used amount of fuel in the equipment 200 and power consumption in the equipment 200 resulting from an operation of the equipment 200, as the performance data. The performance data acquisition unit 110 is configured to acquire such performance data from the facility 20 in real time, for example, via a network. However, the present invention is not limited thereto. The performance data acquisition unit 110 may also be configured to acquire such performance data in a batch unit via an operator or various memory devices. The performance data acquisition unit 110 is configured to supply the acquired performance data to the data storage unit 120.

The data storage unit 120 is configured to store environmental data and performance data. For example, the data storage unit 120 is configured to store the environmental data supplied from the environmental data acquisition unit 100 and the performance data supplied from the performance data acquisition unit 110 in association with a date. The data storage unit 120 is configured, when information of specifying a period, which will be described later, is supplied, to supply the environmental data and the performance data in the period to the preprocessing unit 140.

The input unit 130 is configured to receive information of specifying a period. For example, the input unit 130 may be a user interface, and is configured to receive information of specifying a period input by a user via a keyboard, a mouse, or the like. However, the present invention is not limited thereto. The input unit 130 may also be configured to acquire information of specifying such a period via a network or via various memory devices. At this time, the input unit 130 is configured to receive information of specifying a learning target period, which is a target period for learning a relationship between the operation environment and the operation performance, and an evaluation target period, which is a target period for evaluating the operation performance, respectively. That is, the input unit 130 is configured to receive information of specifying two periods, which are a period that is a reference for comparison and a period that is a target of comparison, respectively. The input unit 130 is configured to supply the received information of specifying a period to the data storage unit 120 and the learning model storage unit 160.

The preprocessing unit 140 is configured to pre-process the environmental data and the performance data. For example, the preprocessing unit 140 is configured to pre-process the environmental data and the performance data supplied from the data storage unit 120. The pre-processing unit 140 is configured to supply the pre-processed environmental data and performance data to the learning unit 150, the estimation unit 170, and the evaluation unit 180.

The learning unit 150 is configured to generate a learning model. For example, the learning unit 150 is configured, when the environmental data and the performance data in the learning target period are supplied from the preprocessing unit 140, to learn a relationship between an operation environment and an operation performance by using the data as learning data. The learning unit 150 is configured to generate a learning model machine-learned so as to output an operation performance corresponding to an operation environment. The learning unit 150 is configured to supply the generated learning model to the learning model storage unit 160.

The learning model storage unit 160 is configured to store the learning model in association with each learning target period. For example, the learning model storage unit 160 is configured to store the learning model, which has been generated by the learning unit 150 based on the environmental data and the performance data in the learning target period, in association with each learning target period Note that, in the above description, the case where the learning model storage unit 160 is configured to store the learning model generated by the learning unit 150 inside the evaluation apparatus 10, has been shown as an example. However, the present invention is not limited thereto. The learning model storage unit 160 may also be configured to store a learning model generated outside the evaluation apparatus 10. That is, the learning unit 150 may also be provided outside the evaluation apparatus 10, instead of or in addition to the inside of the evaluation apparatus 10.

The estimation unit 170 is configured to estimate an operation performance on an operation basis in the learning target period under an operation environment in the evaluation target period, based on the environmental data and the performance data in the learning target period. For example, the estimation unit 170 is configured to estimate the operation performance on the operation basis in the learning target period under the operation environment in the evaluation target period, based on an output of the learning model machine-learned so as to output the operation performance corresponding to the operation environment by using the environmental data and the performance data in the learning target period, as learning data. The estimation unit 170 is configured to supply an estimated value of the estimated operation performance to the evaluation unit 180.

The evaluation unit 180 is configured to calculate an indicator that relatively evaluates an actually measured value of the operation performance in the evaluation target period with respect to the estimated value of the estimated operation performance. That is, the evaluation unit 180 is configured to calculate an indicator that evaluates the actually measured value of the operation performance in the evaluation target period by using, as a reference, the estimated value of the operation performance supplied from the estimation unit 170. The evaluation unit 180 is configured to output the calculated indicator to the output unit 190.

The output unit 190 is configured to output the indicator. For example, the output unit 190 is configured to display and output the indicator supplied from the evaluation unit 180 on a monitor. However, the present invention is not limited thereto. The output unit 190 may also be configured to output such indicator by voice, to output the indicator by print-out or to output the indicator by transmitting the same to another functional unit or apparatus.

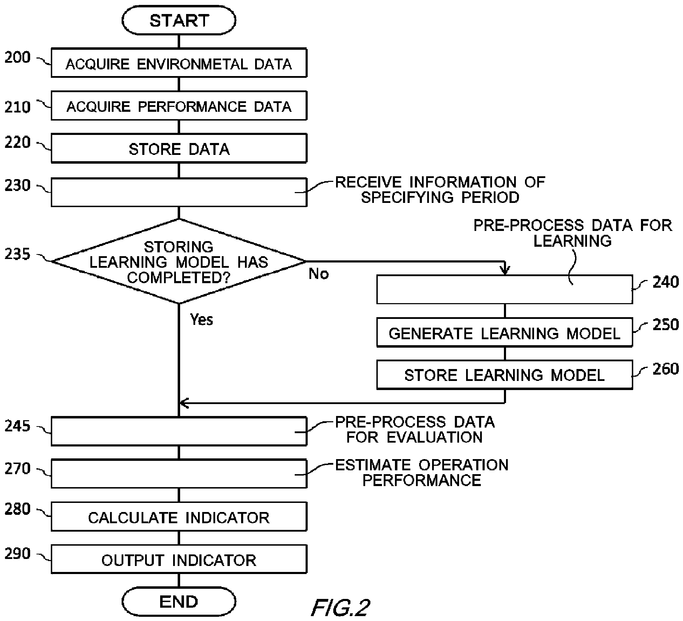

Fig. 2 shows an example of an evaluation flow in the evaluation apparatus 10 according to the present embodiment. Note that, in the present drawing, a case where the evaluation apparatus 10 evaluates, as the performance, a used amount of energy in an air handling equipment (an example of the equipment 200) provided in a plant (an example of the facility 20), thereby outputting an energy saving effect quantity in the air handling equipment as an indicator is described as an example.

In step 200, the evaluation apparatus 10 acquires environmental data. For example, the environmental data acquisition unit 100 acquires environmental data, which indicates an operation environment of the equipment 200, from the facility 20 in real time via a network. At this time, the environmental data acquisition unit 100 may acquire data indicating an outside air condition, as the environmental data. As an example, the environmental data acquisition unit 100 may acquire data such as an outside air temperature and an outside air humidity around the facility 20, as the environmental data.

In addition, the environmental data acquisition unit 100 may acquire data indicating an operational state in the facility 20 provided with the equipment 200, as the environmental data. As an example, the environmental data acquisition unit 100 may acquire data such as a production schedule in the plant or power consumption of a group of apparatuses operating in the plant in correlation with the production schedule, as the environmental data.

In this way, the environmental data acquisition unit 100 may acquire data indicating an outside air condition and data indicating an operational state in the facility 20, as the environmental data. The environmental data acquisition unit 100 supplies the acquired environmental data to the data storage unit 120.

In step 210, the evaluation apparatus 10 acquires performance data. For example, the performance data acquisition unit 110 acquires performance data, which indicates an operation performance of the equipment 200, from the facility 20 in real time via a network. At this time, the performance data acquisition unit 110 may acquire data indicating a used amount of fuel in the equipment 200, as the performance data. As an example, the performance data acquisition unit 110 may acquire data such as a used amount or the like of LPG (Liquefied Petroleum Gas) or city gas used so as to generate, in a boiler, steam for heating and humidifying an inside of the facility 20, as the performance data.

In addition, the performance data acquisition unit 110 may acquire data indicating at least any of power consumption in the equipment 200, as the performance data. As an example, the performance data acquisition unit 110 may acquire data such as electric power consumed by a chiller so as to obtain cooling water for cooling and dehumidifying an inside of the facility 20, as the performance data.

In this way, the performance data acquisition unit 110 may acquire data, which indicates at least any of a used amount of fuel in the equipment 200 and power consumption in the equipment 200, as the performance data. The performance data acquisition unit 110 supplies the acquired performance data to the data storage unit 120.

In step 220, the evaluation apparatus 10 stores the environmental data and the performance data. For example, the data storage unit 120 stores the environmental data acquired in step 200 and the performance data acquired in step 210 in association with a date.

In step 230, the evaluation apparatus 10 receives information of specifying a period. For example, the input unit 130 receives information of specifying a period input by a user via a keyboard, a mouse, or the like. As an example, the input unit 130 receives information on a date range for specifying the second half of 2018 (FY2018) (i.e., from October 1, 2018 to March 31, 2019), as information of specifying a learning target period. In addition, the input unit 130 receives information on a date range for specifying the first half of FY2019 (i.e., from April 1, 2019 to September 30, 2019), information on a date range for specifying the second half of FY2019 (from October 1, 2019 to March 31, 2020), information on a date range for specifying the first half of FY2020 (from April 1, 2020 to September 30, 2020), and information on a date range for specifying the second half of FY2020 (from October 1, 2020 to March 31, 2021), respectively, as the information of specifying an evaluation target period. In this way, the input unit 130 may simultaneously receive the information of specifying a plurality of evaluation target periods.

In step 235, the evaluation apparatus 10 determines whether a learning model corresponding to the learning target period is stored. For example, the input unit 130 accesses the learning model storage unit 160 and determines whether a learning model corresponding to the learning target period (here, the second half of FY2018) received in step 230 is stored. When it is determined in step 235 that the learning model is stored (in a case of Yes), the evaluation apparatus 10 advances the processing to step 245.

On the other hand, when it is determined in step 235 that the learning model is not stored (in a case of No), the input unit 130 supplies the information of specifying the learning target period to the data storage unit 120. In response to this, the data storage unit 120 supplies the environmental data and the performance data in the specified learning target period to the preprocessing unit 140.

In step 240, the evaluation apparatus 10 pre-processes data for learning. For example, the preprocessing unit 140 pre-processes the environmental data and the performance data in the learning target period (here, the second half of FY2018) supplied from the data storage unit 120 in step 235. As an example, when data on outside air temperatures and outside air humidities at a plurality of places around the plant is acquired as the environmental data, the preprocessing unit 140 may calculate an outside air specific enthalpy at each place from the data, and calculate statistics (for example, an average value, a median value and the like) of the outside air enthalpies at the plurality of places. In addition, as an example, when a plurality of boilers are operating in the air handling equipment and a used amount of LPG for each of the boilers is acquired as the performance data, the preprocessing unit 140 may calculate a sum total of the used amounts of LPG in the plurality of boilers. The preprocessing unit 140 supplies the environmental data and the performance data pre-processed in this way to the learning unit 150.

In step 250, the evaluation apparatus 10 generate a learning model. For example, the learning unit 150 learns a relationship between an operation environment and an operation performance by using the environmental data and the performance data in the learning target period pre-processed in step 240, as learning data. The learning unit 150 is configured to generate a learning model machine-learned so as to output an operation performance corresponding to an operation environment. In this way, in a case where a learning model corresponding to a specified learning target period is not stored, the learning unit 150 generates a learning model corresponding to the specified learning target period by using, as the learning data, the environmental data and the performance data in the specified learning target period. Note that, at this time, the learning unit 150 may select any machine learning model. For example, the learning unit 150 may perform linear regression by using the outside air specific enthalpy and the operational state of the plant, as explanatory variables, and generate a multiple regression model that predicts a used amount of LPG. The learning model generated in this way can be interpreted as a model that can predict an operation performance on a basis of an operation environment in a date range used as the learning data, from environmental data under other operation environments, which is not used as the learning data. The learning unit 150 supplies the generated learning model to the learning model storage unit 160.

In step 260, the evaluation apparatus 10 stores the learning model. For example, the learning model storage unit 160 stores the learning model generated in step 250 in association with each learning target period. Then, the evaluation apparatus 10 advances the processing to step 245.

In step 245, the evaluation apparatus 10 pre-processes data for evaluation. For example, the input unit 130 supplies information of specifying the evaluation target period (here, the first half of FY2019, the second half of FY2019, the first half of FY2020, and the second half of FY2020) received in step 230 to the data storage unit 120. In response to this, the data storage unit 120 supplies the environmental data and the performance data in the evaluation target period to the preprocessing unit 140. The preprocessing unit 140 pre-processes the environmental data and the performance data in the evaluation target period supplied from the data storage unit 120. Since the specific method of preprocessing is the same as step 240, the description thereof is omitted here. The preprocessing unit 140 supplies the pre-processed environmental data to the estimation unit 170. In addition, the preprocessing unit 140 supplies the pre-processed performance data to the evaluation unit 180. Note that, the performance data supplied here can be regarded as an actually measured value of the performance data in the evaluation target period.

In step 270, the evaluation apparatus 10 estimates an operation performance. For example, the estimation unit 170 estimates an operation performance on an operation basis in the learning target period under an operation environment in the evaluation target period, based on the environmental data and the performance data in the learning target period. More specifically, the input unit 130 supplies the information of specifying the learning target period received in step 230 to the learning model storage unit 160. In response to this, the learning model storage unit 160 supplies a learning model corresponding to the learning target period to the estimation unit 170. Note that, such a learning model may be a pre-stored model or a model newly generated in step 250. The estimation unit 170 estimates an operation performance on the operation basis in the learning target period under the operation environment in the evaluation target period, by using, as an estimated value, a value that is output from the learning model in response to the input of the environmental data pre-processed in step 245 into the learning model.

At this time, in evaluating the first half of FY2019, the estimation unit 170 inputs the environmental data in the first half of FY2019 into the learning model, and uses a value output from the learning model, as an estimated value. That is, in evaluating the first half of FY2019, the estimation unit 170 estimates a performance on an operation basis in the second half of FY2018 when the operation environment in the second half of FY2018 is replaced with a same environment as that in the first half of FY2019. Similarly, in evaluating the second half of FY2019, the estimation unit 170 inputs the environmental data in the second half of FY2019 into the learning model, and uses a value output from the learning model, as an estimated value. That is, in evaluating the second half of FY2019, the estimation unit 170 estimates a performance on an operation basis in the second half of FY2018 when the operation environment in the second half of FY2018 is replaced with a same environment as that in the second half of FY2019. The same applies to the first half of FY2020 and the second half of FY2020. In this way, the estimation unit 170 estimates the operation performance on the operation basis in the learning target period under the operation environment in the evaluation target period, based on the output of the learning model machine-learned so as to output the operation performance corresponding to the operation environment by using the environmental data and the performance data in the learning target period, as the learning data. The estimation unit 170 supplies an estimated value of the estimated operation performance to the evaluation unit 180.

In step 280, the evaluation apparatus 10 calculates an indicator. For example, the evaluation unit 180 calculates an indicator that relatively evaluates an actually measured value of the operation performance in the evaluation target period with respect to the estimated value of the estimated operation performance. As an example, the evaluation unit 180 calculates the indicator by dividing the estimated value of the operation performance supplied in step 270 by the actually measured value of the operation performance supplied in step 245. Here, such an indicator is defined as KPI (Key Performance Indicators). Such KPI means that the more the value exceeds 1, the higher the evaluation (for example, energy saving effect) is, and the more the value falls below 1, the lower the evaluation is (for example, there is no energy saving effect when the value falls below 1). In this way, the evaluation unit 180 calculates an indicator that evaluates the actually measured value of the operation performance in the evaluation target period, by using the estimated value of the operation performance supplied from the estimation unit 170, as a reference. The evaluation unit 180 outputs the calculated indicator to the output unit 190.

In step 290, the evaluation apparatus 10 outputs the indicator. For example, the output unit 190 displays and outputs the indicator calculated in step 280 on a monitor. In this way, the evaluation apparatus 10 according to the present embodiment estimates a performance on a past operation basis when a past environment is replaced with a same environment as that in the evaluation target period. The evaluation apparatus 10 relatively evaluates the operation performance actually measured in the evaluation target period with respect to the estimated performance on the past operation basis. Subsequently, an output example of an evaluation result in the evaluation apparatus 10 according to the present embodiment is described in detail with reference to the drawings.

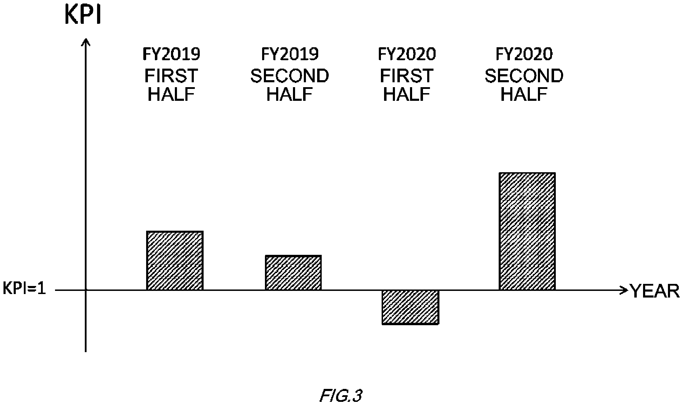

Fig. 3 shows an output example of an evaluation result in the evaluation apparatus 10 according to the present embodiment. In the present drawing, the horizontal axis shows the year and the vertical axis shows the KPI. In addition, in the present drawing, the horizontal axis intersects with the vertical axis at a position of KPI=1. That is, a region above the horizontal axis indicates KPI>1, and a region below the horizontal axis indicates KPI<1. In the present drawing, the respective KPIs in the four evaluation target periods of the first half of FY2019, the second half of FY2019, the first half of FY2020 and the second half of FY2020 from the left are shown as bar graphs. In this way, the output unit 190 may output respective indicators in the plurality of evaluation target periods. Note that, the KPI in the present drawing is calculated by using the second half of FY2018 as the learning target period, as described above. Here, the outside air conditions are different due to the different seasons in the first half and the second half. In addition, even when the season is the same, the outside air conditions are different due to climate change. Further, when the year or period changes, the production schedule at the plant naturally changes. However, according to the evaluation apparatus 10 according to the present embodiment, since the performances in different periods are evaluated under the same condition, an influence on the operation performance due to a difference in operation environment can be offset.

As shown in the present drawing, since KPI>1 is in the first half of FY2019, the second half of FY2019 and the second half of FY2020, it can be said that there was an energy saving effect with respect to the second half of FY2018. In addition, it can be said that the energy saving effect quantity was higher in order of the second half of FY2020, the first half of FY2019 and the second half of FY2019. On the other hand, since KPI<1 is in the first half of FY2020, it can be said that there was no energy saving effect with respect to the second half of FY2018 (the more energy was uselessly consumed in the first half of FY2020 than the second half of FY2018). A user who sees such a display can determine, for example, that the energy saving effect deteriorated from the first half of FY2019 to the first half of FY2020 and the energy saving effect was improved in the second half of FY2020. Thereby, the user can determine, for example, that energy saving activities undertaken in the second half of FY2020 have been successful and have led to the improvement result.

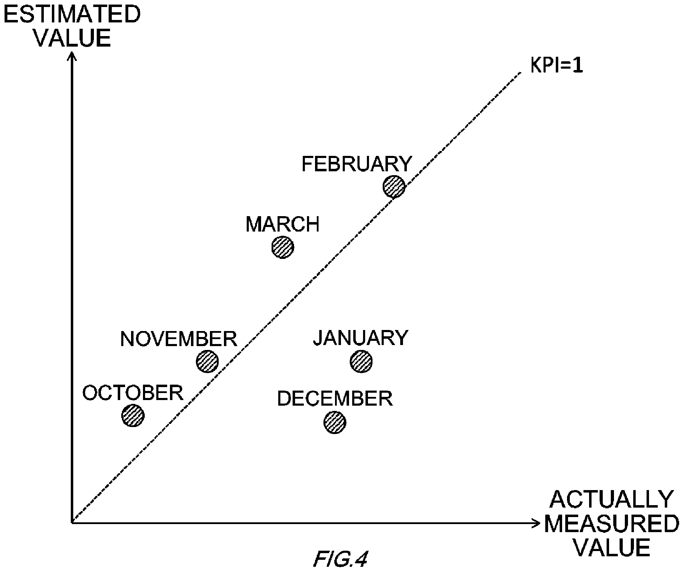

Fig. 4 shows another output example of the evaluation result in the evaluation apparatus 10 according to the present embodiment. For example, the evaluation apparatus 10 can shift to the display of Fig. 4, in response to one evaluation target period of the plurality of evaluation target periods displayed in Fig. 3 being selected by the user. Here, it is assumed that the evaluation target period in which KPI<1 is selected, i.e., the first half of FY2020 is selected by the user. In the present drawing, the horizontal axis shows the actually measured values of the performance in the evaluation target period, and the vertical axis shows the estimated values of the operation performance on the operation basis in the learning target period under the operation environment in the evaluation target period. Further, in the present drawing, the dotted line shows a case where KPI = 1, i.e., the actually measured value and the estimated value are the same. That is, a region above the dotted line indicates KPI>1, and a region below the dotted line indicates KPI<1. In the present drawing, the first half of FY2020, which is the selected evaluation target period, is divided by month, and the respective KPIs in the six months are shown in a scatter diagram. In this way, the output unit 190 may output the respective indicators in the plurality of periods into which the one evaluation target period is divided. Note that, in performing such an output, the evaluation apparatus 10 may set the periods into which the evaluation target period is divided, here, the six "months" into which the half period is divided, as new evaluation target periods, and calculate a monthly indicator by again executing step 245, step 270, step 280, and step 290 in the flow of Fig. 2.

As shown in the present drawing, since KPI>1 is in October, November, February and March, it can be said that there was the energy saving effect with respect to the second half of FY2018. Further, in the region above the dotted line, since the KPI becomes larger as a distance from the dotted line increases, it can be said that the energy saving effect quantity was higher in order of March, October, November and February. On the other hand, since KPI<1 is in December and January, it can be said that there was no energy saving effect with respect to the second half of FY2018. In addition, in the region below the dotted line, since the KPI becomes smaller as the distance from the dotted line increases, it can be said that the more energy was uselessly consumed in December than January. That is, since the improvement effect was obtained in 4 months (October, November, February and March) of the half year but the sum total of deterioration in energy saving effect in the remaining 2 months (December and January) was larger than the sum total of the improvement effect, it is understood that there was no energy saving effect in the first half of FY2020 as a whole with respect to the second half of FY2018. The user who saw such a display can determine, for example, that the deterioration in energy saving effect continuing from the first half of 2019 continued in October 2020 and November 2020, peaked in December 2020, changed to the improvement from January 2021, and was improved after February 2021 to the extent that the energy saving effect with respect to the second half of FY2018 was achieved. Thereby, the user can determine, for example, that energy saving activities undertaken from January 2021 have been successful and have led to the improvement result.

In general, in the air-handling equipment of plants and the like, efforts such as equipment renovation for reducing a used amount of energy are continuously carried out. However, for example, when estimating the energy saving effect, based on the rated power, it is not possible to correctly estimate how much the energy reduction effect the energy saving activity has led to. Further, in the air-handling equipment of plants and the like, an operational state of the entire plant may also affect an operating rate of the air handling equipment. Therefore, if the energy saving effect is calculated on the basis of only an operation state of an apparatus of interest, without considering a state on a demand-side on air, the calculated energy saving effect quantity is unreliable. Therefore, it is desired to calculate the energy saving effect in a plant or the like more accurately.

In contrast, the evaluation apparatus 10 according to the present embodiment is configured to estimate the operation performance on the operation basis in the learning target period under the operation environment in the evaluation target period, based on the environmental data and the performance data in the learning target period. The evaluation apparatus 10 is configured to relatively evaluate the actually measured value of the operation performance in the evaluation target period with respect to the estimated value of the estimated operation performance. Thereby, the evaluation apparatus 10 according to the present embodiment is configured to estimate the performance on a past operation basis when a past environment is replaced with a same environment as that in the evaluation target period. The evaluation apparatus 10 is configured to relatively evaluate the operation performance actually measured in the evaluation target period with respect to the estimated performance on the past operation basis. For this reason, since the evaluation apparatus 10 aligns and evaluates the performances in different periods under the same condition, it is possible to offset an influence on the operation performance due to a difference in operation environment and to correctly evaluate the operation performance.

In addition, the evaluation apparatus 10 according to the present embodiment is configured to estimate the operation performance, based on the output of the learning model machine-learned using the environmental data and the performance data in the learning target period, as the learning data. Thereby, according to the evaluation apparatus 10 of the present embodiment, the operation performance is estimated based on the relationship between the operation environment and the operation performance learned from the past data actually obtained, so that the operation performance can be estimated based on an objective basis.

In addition, the evaluation apparatus 10 according to the present embodiment further comprises the learning unit configured to generate a learning model. Thereby, according to the evaluation apparatus 10 of the present embodiment, a function of evaluating an evaluation target and a learning function for evaluating the evaluation target can be provided as an integrated apparatus.

Further, the evaluation apparatus 10 according to the present embodiment is configured, when a learning model corresponding to the specified learning target period is not stored, to generate the learning model. Thereby, according to the evaluation apparatus 10 of the present embodiment, it is possible to avoid generating even a learning model that has been already learned or has been already obtained from another apparatus, so that it is possible to reduce a processing load relating to learning.

Further, the evaluation apparatus 10 according to the present embodiment can output the respective indicators in the plurality of evaluation target periods, or can output the respective indicators in the plurality of periods into which the one evaluation target period is divided. Thereby, according to the evaluation apparatus 10 of the present embodiment, it is possible to output the evaluation results in various forms, so that it is possible to provide the user with various analysis opportunities.

Further, the evaluation apparatus 10 according to the present embodiment is configured to evaluate the evaluation target by using data indicating the outside air condition and the operational state in the facility, as the environmental data, and data indicating the used amount of energy in the equipment, as the performance data. Thereby, according to the evaluation apparatus 10 of the present embodiment, the outside air condition and the operational state in the facility having a particularly strong correlation with the used amount of energy are also taken into consideration, so that the operation performance can be evaluated more accurately.

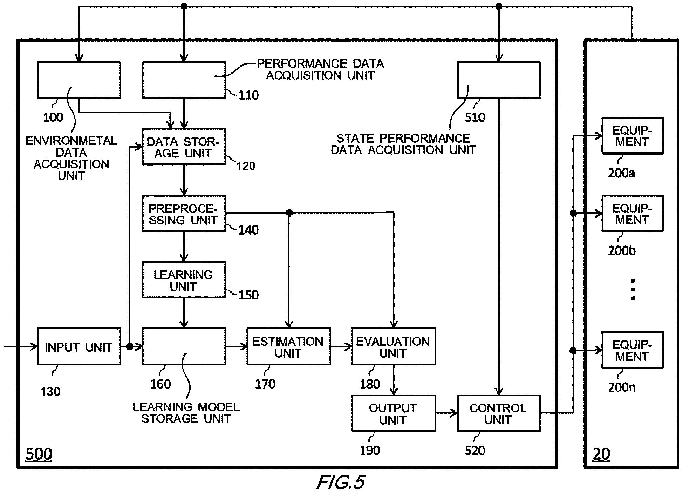

Fig. 5 shows an example of a block diagram of a control apparatus 500 according to the present embodiment. In Fig. 5, the members having the same functions and configurations as those in Fig. 1 are denoted with the same reference signs, and the descriptions thereof are omitted, except for differences to be described below. The control apparatus 500 according to the present embodiment further has a function of controlling the equipment 200, based on the calculated indicator, in addition to the functions of the evaluation apparatus 10 described above. That is, the control apparatus 500 according to the present embodiment is configured to provide the equipment 200 with a manipulated variable (MV) based on the calculated indicator. The equipment 200 is configured to input the manipulated variable provided from the control apparatus 500 and to output a controlled variable. The control apparatus 500 according to the present embodiment further comprises a state data acquisition unit 510 and a control unit 520, in addition to the functional units of the evaluation apparatus 10 described above.

The state data acquisition unit 510 is configured to acquire state data indicating a state of the facility 20 provided with equipment 200. For example, the state data acquisition unit 510 is configured to acquire a measured value (PV: Process Variable) indicating an operation state as a result of controlling the equipment 200, which is a control target, as state data, from the facility 20 in real time via a network. Here, such a measured value may be an output of the equipment 200, which is a control target, i.e., a controlled variable, or may be various physical quantities that change according to the controlled variable. Note that, in the above description, the case where the state data acquisition unit 510 acquires such state data via a network has been shown as an example. However, the present invention is not limited thereto. The state data acquisition unit 510 may also be configured to acquire such state data in a batch unit via an operator or various memory devices. The state data acquisition unit 510 is configured to supply the acquired state data to the control unit 520.

The control unit 520 is configured to control the equipment 200, based on the indicator. For example, the control unit 520 may be configured to control, by using the state data supplied from the state data acquisition unit 510 and manipulated variable data indicating a manipulated variable provided to the equipment 200 by the control unit, the equipment 200, which is a control target, by a control model machine-learned so as to output a manipulated variable corresponding to a state of the equipment 200. That is, the control unit 520 may be configured to function as a so-called AI (Artificial Intelligence) controller.

At this time, the control unit 520 is configured to control the equipment 200, based on an output of the control model machine-learned so as to output a manipulated variable to be provided to the equipment 200 by using the indicator output from the output unit 190. Here, the control unit 520 may hold such a control model in advance. Instead of or in addition to this, the control unit 520 may be configured to generate such a control model by performing reinforcement learning so that a manipulated variable whose reward including an indicator as at least a part is higher is output as a more recommended manipulated variable.

In general, when an agent observes a state and selects a certain action, the state changes based on the action. In reinforcement learning, a certain reward is provided in association with such change in state, so that the agent learns selection of a better action (decision-making). Further, in reinforcement learning, in general, the agent learns so as to select an action that maximizes a total reward to be obtained in the future by performing evaluation of value. In this way, in reinforcement learning, the agent learns an appropriate action, considering an interaction that an action has on the state by learning the action, i.e., an action for maximizing a reward that will be obtained in the future.

Therefore, the control unit 520 may be configured to generate a control model by performing reinforcement learning so that a manipulated variable whose reward including an indicator as at least a part is higher is output as a more recommended manipulated variable. As described above, the evaluation unit 180 is configured to calculate an indicator by dividing an estimated value of an operation performance by an actually measured value of the operation performance. Therefore, the control unit 520 can generate such a control model by performing reinforcement learning by using a reward function in which a reward becomes higher as the indicator (KPI) output from the output unit 190 becomes larger and the reward becomes lower as the indicator becomes smaller. Thereby, the control unit 520 can generate a control model in which a manipulated variable whose KPI is higher is output as a more recommended manipulated variable. By providing an output of such a control model to the equipment 200, as a manipulated variable, the control unit 520 can control the equipment 200 so that the KPI becomes large, i.e., the energy saving effect quantity becomes large.

In this way, the control apparatus 500 according to the present embodiment is configured to control the equipment 200, which is a control target, by the control model reinforcement-learned based on the KPI. Thereby, according to the control apparatus 500 of the present embodiment, for example, it is possible to control the equipment 200 so as to maximize the energy saving effect quantity. Therefore, since the control apparatus 500 according to the present embodiment can correctly evaluate the operation of the equipment 200 and controls the equipment 200, based on a result of the correct evaluation, it is possible to provide a structure that maximizes the energy saving effect quantity, for example.

Note that, in the above description, the case where the control apparatus 500 according to the present embodiment further has the function of controlling the equipment 200, based on the calculated indicator, in addition to all the functions of the evaluation apparatus 10 described above, has been shown as an example. However, the present invention is not limited thereto. At least a part of the functions of the evaluation apparatus 10 described above may be provided outside the control apparatus 500 (for example, on the cloud). As an example, the function of estimating the performance on the past operation basis may be provided outside the control apparatus 500. In this case, the control apparatus 500 may comprise, for example, the environmental data acquisition unit 100, the performance data acquisition unit 110, the data storage unit 120, the input unit 130, the preprocessing unit 140, the learning unit 150, the learning model storage unit 160, and an estimation result acquisition unit configured to acquire an estimated value of an operation performance estimated by the estimation unit 170 provided externally, instead of the estimation unit 170. Further, the function of relatively evaluating the performance in the evaluation target period with respect to the performance on the past operation basis may also be provided outside the control apparatus 500. In this case, the control apparatus 500 may comprise, for example, an indicator acquisition unit configured to acquire an indicator calculated by the evaluation unit 180 provided externally, instead of the evaluation unit 180.

Various embodiments of the present invention may be described with reference to flowcharts and block diagrams whose blocks may represent (1) steps of processes in which operations are performed or (2) sections of apparatuses responsible for performing operations. Certain steps and sections may be implemented by dedicated circuitry, programmable circuitry supplied together with computer-readable instructions stored on computer-readable media, and/or processors supplied together with computer-readable instructions stored on computer-readable media. The dedicated circuitry may include a digital and/or analog hardware circuit, or may include an integrated circuit (IC) and/or a discrete circuit. The programmable circuitry may include a reconfigurable hardware circuit including logical AND, logical OR, logical XOR, logical NAND, logical NOR, and other logical operations, a memory element such as a flip-flop, a register, a field programmable gate array (FPGA) and a programmable logic array (PLA), and the like.

Computer-readable media may include any tangible device that can store instructions to be executed by a suitable device, and as a result, the computer-readable media having instructions to be stored in the device comprise an article of manufacture including instructions that can be executed to provide means for performing operations specified in the flowcharts or block diagrams. Examples of the computer readable media may include an electronic storage medium, a magnetic storage medium, an optical storage medium, an electromagnetic storage medium, a semiconductor storage medium, and the like. More specific examples of the computer-readable media may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disk read-only memory (CD-ROM), a digital versatile disk (DVD), a BLU-RAY (registered trademark) disk, a memory stick, an integrated circuit card, and the like.

Computer-readable instructions may include assembler instructions, instruction-set-architecture (ISA) instructions, machine instructions, machine dependent instructions, microcode, firmware instructions, state-setting data, or either source code or object code described in any combination of one or more programming languages, including an object oriented programming language such as Smalltalk (registered trademark), JAVA (registered trademark) and C++, and a conventional procedural programming language such as a 'C' programming language or similar programming languages.

Computer-readable instructions may be provided to a processor of a general purpose computer, a special purpose computer, or other programmable data processing apparatus, or to programmable circuitry, locally or via a local area network (LAN), wide area network (WAN) such as the Internet, and the like, and the computer-readable instructions may be executed so as to provide means for performing operations specified in the flowcharts or block diagrams. Examples of a processor include computer processor, a processing unit, a microprocessor, a digital signal processor, a controller, a microcontrollers, and the like.

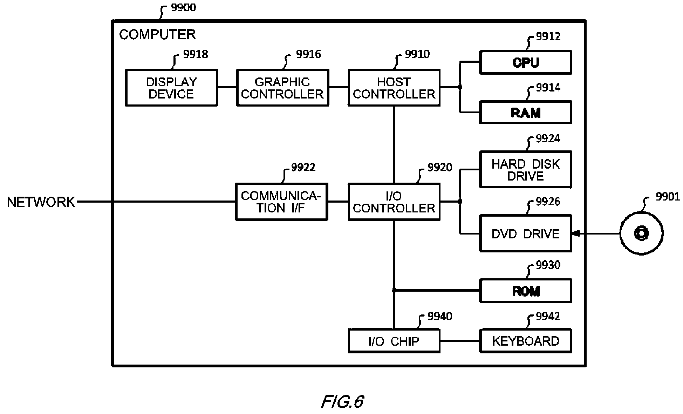

Fig. 6 shows an example of a computer 9900 where a plurality of aspects of the present invention may be entirely or partially embodied. A program that is installed in the computer 9900 can cause the computer 9900 to function as or execute operations associated with the apparatus of the embodiment of the present invention or one or more sections of the apparatus, and/or cause the computer 9900 to execute the processes of the embodiment of the present invention or steps thereof. Such a program may be executed by a CPU 9912 so as to cause the computer 9900 to execute certain operations associated with some or all of the flowcharts and the blocks in the block diagrams described herein.

The computer 9900 according to the present embodiment includes the CPU 9912, a RAM 9914, a graphic controller 9916 and a display device 9918, which are mutually connected by a host controller 9910. The computer 9900 further includes input and output units such as a communication interface 9922, a hard disk drive 9924, a DVD drive 9926 and an IC card drive, which are connected to the host controller 9910 via an input and output controller 9920. The computer also includes legacy input and output units such as a ROM 9930 and a keyboard 9942, which are connected to the input and output controller 9920 via an input and output chip 9940.

The CPU 9912 is configured to operate according to programs stored in the ROM 9930 and the RAM 9914, thereby controlling each unit. The graphic controller 9916 is configured to acquire image data generated by the CPU 9912 on a frame buffer or the like provided in the RAM 9914 or in itself, and to cause the image data to be displayed on the display device 9918.

The communication interface 9922 is configured to communicate with other electronic devices via a network. The hard disk drive 9924 is configured to store programs and data that are used by the CPU 9912 within the computer 9900. The DVD drive 9926 is configured to read programs or data from a DVD-ROM 9901, and to provide the hard disk drive 9924 with the programs or data via the RAM 9914. The IC card drive is configured to read programs and data from an IC card, and/or to write programs and data into the IC card.

The ROM 9930 is configured to store therein a boot program or the like that is executed by the computer 9900 at the time of activation, and/or a program depending on the hardware of the computer 9900. The input and output chip 9940 may also be configured to connect various input and output units to the input and output controller 9920 via a parallel port, a serial port, a keyboard port, a mouse port and the like.

A program is provided by a computer-readable medium such as the DVD-ROM 9901 or the IC card. The program is read from the computer-readable medium, is installed into the hard disk drive 9924, the RAM 9914 or the ROM 9930, which are also examples of the computer-readable medium, and is executed by the CPU 9912. Information processing described in these programs is read into the computer 9900, resulting in cooperation between the programs and the various types of hardware resources described above. An apparatus or method may be constituted by realizing an operation or processing of information according to a use of the computer 9900.

For example, when communication is performed between the computer 9900 and an external device, the CPU 9912 may be configured to execute a communication program loaded onto the RAM 9914 to instruct the communication interface 9922 for communication processing, based on processing described in the communication program. The communication interface 9922 is configured, under control of the CPU 9912, to read transmission data stored on a transmission buffer processing area provided in a recording medium such as the RAM 9914, the hard disk drive 9924, the DVD-ROM 9901 or the IC card, and to transmit the read transmission data to a network or to write reception data received from the network to a reception buffer processing area or the like provided on the recording medium.

In addition, the CPU 9912 may be configured to cause all or a necessary portion of a file or a database, which has been stored in an external recording medium such as the hard disk drive 9924, the DVD drive 9926 (DVD-ROM 9901) and the IC card, to be read into the RAM 9914, thereby executing various types of processing on the data on the RAM 9914. Next, the CPU 9912 is configured to write the processed data back to the external recording medium.

Various types of information, such as various types of programs, data, tables, and databases, may be stored in the recording medium and may be subjected to information processing. The CPU 9912 may be configured to execute, on the data read from the RAM 9914, various types of processing including various types of operations, processing of information, conditional judgment, conditional branching, unconditional branching, search and replacement of information and the like described in the present disclosure and specified by instruction sequences of the programs, and to write a result back to the RAM 9914. The CPU 9912 may also be configured to search for information in a file, a database, etc., in the recording medium. For example, when a plurality of entries, each having an attribute value of a first attribute associated with an attribute value of a second attribute, is stored in the recording medium, the CPU 9912 may be configured to search for an entry having a specified attribute value of the first attribute that matches a condition from the plurality of entries, and to read the attribute value of the second attribute stored in the entry, thereby acquiring the attribute value of the second attribute associated with the first attribute that satisfies a predetermined condition.

The program or software modules described above may be stored in the computer-readable storage medium on the computer 9900 or near the computer 9900. In addition, a recording medium such as a hard disk or a RAM provided in a server system connected to a dedicated communication network or the Internet can be used as a computer-readable medium, thereby providing the programs to the computer 9900 via the network.

The operations, procedures, steps, stages and the like of each process performed by an apparatus, system, program, and method shown in the claims, embodiments, or diagrams can be performed in any order as long as the order is not indicated by 'prior to,' 'before,' or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: evaluation apparatus
100: environmental data acquisition unit
110: performance data acquisition unit
120: data storage unit
130: input unit
140: preprocessing unit
150: learning unit
160: learning model storage unit
170: estimation unit
180: evaluation unit
190: output unit
200: equipment
500: control apparatus
510: state data acquisition unit
520: control unit
9900: computer
9901: DVD-ROM
9910: host controller
9912: CPU
9914: RAM
9916: graphic controller
9918: display device
9920: input and output controller
9922: communication interface
9924: hard disk drive
9926: DVD drive
9930: ROM
9940: input and output chip
9942: keyboard

## Claims

1. An evaluation apparatus (10) comprising:
an environmental data acquisition unit (100) configured to acquire environmental data indicating an operation environment of an equipment (200);
a performance data acquisition unit (110) configured to acquire performance data indicating an operation performance of the equipment (200);
an input unit (130) configured to receive information of specifying a learning target period, which is a past period for learning a relationship between the operation environment and the operation performance of the past period, and an evaluation target period, which is a target period for evaluating the operation performance of the equipment (200) in the evaluation target period;
a preprocessing unit (140) performing preprocessing of the acquired environmental data and performance data;
a learning unit (150) configured to generate a learning model, wherein the learning model is a model machine-learned using, as learning data, the environmental data and the performance data in the learning target period preprocessed by the preprocessing unit (140), so as to output an operation performance corresponding to the operation environment in the learning target period;
a learning model storage unit (160) configured to store the learning model in association with each learning target period;
an estimation unit (170) configured to
receive the preprocessed environmental data corresponding to the specified evaluation target period from the preprocessing unit (140),
receive a specified learning model corresponding to the specified learning target period from the learning model storage unit (160); and
estimate an estimated operation performance of the equipment (200) in the specified learning target period based on an operation of the equipment (200) in the learning target period, wherein the estimated operation performance is obtained by using a value that is output from the specified learning model in response to an input of the preprocessed environmental data corresponding to the specified evaluation target period into the specified learning model, as an estimated value of the operation performance;
an evaluation unit (180) configured to
receive the estimated value of the operation performance of the equipment (200) from the estimation unit (170),
receive the pre-processed performance data corresponding to the specified evaluation target period from the preprocessing unit (140), and
calculate an indicator based on the received preprocessed performance data by using the estimated value of the operation performance as a reference; and
an output unit (190) configured to output the indicator as an evaluation result of the operation performance of the equipment (200) in the evaluation target period as compared to the estimated operation performance of the equipment (200) in the past period under the same operation environment.

2. The evaluation apparatus (10) according to Claim 1, wherein
the learning unit (150) is configured, in a case where the learning model corresponding to the specified learning target period is not stored, to generate the learning model corresponding to the specified learning target period by using, as the learning data, environmental data and performance data in the specified learning target period.

3. The evaluation apparatus (10) according to Claim 1 or 2, wherein
the evaluation target period includes a plurality of evaluation target periods, and
the output unit (190) is configured to output the indicator in each of the plurality of evaluation target periods.

4. The evaluation apparatus (10) according to Claim 1 or 2, wherein
the evaluation target period includes one evaluation target period,
the one evaluation target period is divided into a plurality of periods, and
the output unit (190) is configured to output the indicator in each of the plurality of periods.

5. The evaluation apparatus (10) according to any one of Claims 1 to 4, wherein
the environmental data acquisition unit (100) is configured to acquire data indicating an outside air condition, as the environmental data.

6. The evaluation apparatus (10) according to any one of Claims 1 to 5, wherein
the environmental data acquisition unit (100) is configured to acquire data indicating an operational state in a facility provided with the equipment (200), as the environmental data.

7. The evaluation apparatus (10) according to any one of Claims 1 to 6, wherein
the performance data acquisition unit (110) is configured to acquire data, which indicates at least any of a used amount of fuel in the equipment (200) and power consumption in the equipment (200), as the performance data.

8. An evaluation method comprising:
acquiring environmental data indicating an operation environment of an equipment (200);
acquiring performance data indicating an operation performance of the equipment (200);
receiving information of specifying a learning target period, which is a past period for learning a relationship between the operation environment and the operation performance of the past period, and an evaluation target period, which is a target period for evaluating the operation performance of the equipment (200) in the evaluation target period;
preprocessing of the acquired environmental data and performance data;
generating a learning model, wherein the learning model is a model machine-learned using, as learning data, the preprocessed environmental data and performance data in the learning target period, so as to output an operation performance corresponding to the operation environment in the learning target period;
storing the learning model in association with each learning target period;
receiving a stored specified learning model corresponding to the specified learning target;
estimating an estimated operation performance of the equipment (200) in the specified learning target period based on an operation of the equipment (200) in the learning target period, wherein the estimated operation performance is obtained by using a value that is output from the specified learning model in response to an input of the preprocessed environmental data corresponding to the specified evaluation target period into the specified learning model, as an estimated value of the operation performance;
calculating an indicator based on the received preprocessed performance data by using the estimated value of the operation performance as a reference; and
outputting the indicator as an evaluation result of the operation performance of the equipment (200) in the evaluation target period as compared to the estimated operation performance of the equipment (200) in the past period under the same operation environment.

9. An evaluation program that, when executed by a computer, causes the computer to function as:
an environmental data acquisition unit (100) configured to acquire environmental data indicating an operation environment of an equipment (200);
a performance data acquisition unit (110) configured to acquire performance data indicating an operation performance of the equipment (200);
an input unit (130) configured to receive information of specifying a learning target period, which is a past period for learning a relationship between the operation environment and the operation performance of the past period, and an evaluation target period, which is a target period for evaluating the operation performance of the equipment (200) in the evaluation target period;
a preprocessing unit (140) performing preprocessing of the acquired environmental data and performance data;
a learning unit (150) configured to generate a learning model, wherein the learning model is a model machine-learned using, as learning data, the environmental data and the performance data in the learning target period preprocessed by the preprocessing unit (140), so as to output an operation performance corresponding to the operation environment in the learning target period;
a learning model storage unit (160) configured to store the learning model in association with each learning target period;
an estimation unit (170) configured to
receive the preprocessed environmental data corresponding to the specified evaluation target period from the preprocessing unit (140),
receive a specified learning model corresponding to the specified learning target period from the learning model storage unit (160); and
estimate an estimated operation performance of the equipment (200) in the specified learning target period based on an operation of the equipment (200) in the learning target period, wherein the estimated operation performance is obtained by using a value that is output from the specified learning model in response to an input of the preprocessed environmental data corresponding to the specified evaluation target period into the specified learning model, as an estimated value of the operation performance;
an evaluation unit (180) configured to
receive the estimated value of the operation performance of the equipment (200) from the estimation unit (170),
receive the pre-processed performance data corresponding to the specified evaluation target period from the preprocessing unit (140), and
calculate an indicator based on the received preprocessed performance data by using the estimated value of the operation performance as a reference; and
an output unit (190) configured to output the indicator as an evaluation result of the operation performance of the equipment (200) in the evaluation target period as compared to the estimated operation performance of the equipment (200) in the past period under the same operation environment.

10. A control apparatus (500) comprising:
the environmental data acquisition unit (100), the performance data acquisition unit (110), the input unit (130), the preprocessing unit (140), the learning unit (150), the learning model storage unit (160), the estimation unit (170), the evaluation unit (180), and the output unit (190) of the evaluation apparatus (10) according to Claim 1; and
a control unit (520) configured to control the equipment (200), based on the indicator.

11. The control apparatus (500) according to Claim 10, wherein
the control unit (520) is configured to control the equipment (200), based on an output of a control model machine-learned so as to output a manipulated variable to be provided to the equipment (200) by using the indicator.

12. The control apparatus (500) according to Claim 11, wherein
the evaluation unit (180) is configured to calculate the indicator by dividing the estimated value of the operation performance by an actually measured value of the operation performance, and
the control unit (520) is configured to generate the control model by performing reinforcement learning so that a manipulated variable whose reward including the indicator as at least a part is higher is output as a more recommended manipulated variable.

13. A computer readable recording medium storing the program according to Claim 9.

## Patentansprüche

1. Auswertungsvorrichtung (10), die aufweist:
eine Umgebungsdatenbeschaffungseinheit (100), die ausgelegt ist, Umgebungsdaten, die eine Betriebsumgebung einer Ausrüstung (200) angeben, zu beschaffen;
eine Leistungsdatenbeschaffungseinheit (110), die ausgelegt ist, Leistungsdaten, die eine Betriebsleistung der Ausrüstung (200) angeben, zu beschaffen;
eine Eingabeeinheit (130), die ausgelegt ist, Informationen zum Spezifizieren einer Lernzielperiode, die eine vergangene Periode zum Lernen einer Beziehung zwischen der Betriebsumgebung und der Betriebsleistung der vergangenen Periode ist, und eine Auswertungszielperiode, die eine Zielperiode zum Auswerten der Betriebsleistung der Ausrüstung (200) in der Auswertungszielperiode ist, zu empfangen;
eine Vorverarbeitungseinheit (140), die eine Vorverarbeitung der beschafften Umgebungsdaten und Leistungsdaten durchführt;
eine Lerneinheit (150), die ausgelegt ist, ein Lernmodell zu erzeugen, wobei das Lernmodell ein Modell ist, das unter Verwendung der Umgebungsdaten und der Leistungsdaten in der Lernzielperiode, die durch die Vorverarbeitungseinheit (140) vorverarbeitet sind, als Lerndaten maschinengelernt wird, um eine Betriebsleistung entsprechend der Betriebsumgebung in der Lernzielperiode auszugeben;
eine Lernmodellspeichereinheit (160), die ausgelegt ist, das Lernmodell in Zuordnung zu jeder Lernzielperiode zu speichern;
eine Schätzeinheit (170), die ausgelegt ist,
die vorverarbeiteten Umgebungsdaten entsprechend der spezifizierten Auswertungszielperiode von der Vorverarbeitungseinheit (140) zu empfangen,
ein spezifiziertes Lernmodell entsprechend der spezifizierten Lernzielperiode von der Lernmodellspeichereinheit (160) zu empfangen; und
eine geschätzte Betriebsleistung der Ausrüstung (200) in der spezifizierten Lernzielperiode auf der Grundlage eines Betriebs der Ausrüstung (200) in der Lernzielperiode zu schätzen, wobei die geschätzte Betriebsleistung durch Verwenden eines Wertes erhalten wird, der von dem spezifizierten Lernmodell als Antwort auf eine Eingabe der vorverarbeiteten Umgebungsdaten, die der spezifizierten Auswertungszielperiode entsprechen, in das spezifizierte Lernmodell als ein geschätzter Wert der Betriebsleistung ausgegeben wird;
eine Auswertungseinheit (180), die ausgelegt ist,
den geschätzten Wert der Betriebsleistung der Ausrüstung (200) von der Schätzeinheit (170) zu empfangen,
die vorverarbeiteten Leistungsdaten, die der spezifizierten Auswertungszielperiode entsprechen, von der Vorverarbeitungseinheit (140) zu empfangen, und
einen Indikator auf der Grundlage der empfangenen vorverarbeiteten Leistungsdaten unter Verwendung des geschätzten Wertes der Betriebsleistung als eine Referenz zu berechnen; und
eine Ausgabeeinheit (190), die ausgelegt ist, den Indikator als ein Auswertungsergebnis der Betriebsleistung der Ausrüstung (200) in der Auswertungszielperiode im Vergleich zu der geschätzten Betriebsleistung der Ausrüstung (200) in der vergangenen Periode unter derselben Betriebsumgebung auszugeben.

2. Auswertungsvorrichtung (10) nach Anspruch 1, wobei
die Lerneinheit (150) ausgelegt ist, in einem Fall, in dem das Lernmodell, das der spezifizierten Lernzielperiode entspricht, nicht gespeichert ist, das Lernmodell, das der spezifizierten Lernzielperiode entspricht, unter Verwendung von Umgebungsdaten und Leistungsdaten in der spezifizierten Lernzielperiode als die Lerndaten zu erzeugen.

3. Auswertungsvorrichtung (10) nach Anspruch 1 oder 2, wobei
die Auswertungszielperiode mehrere Auswertungszielperioden enthält, und
die Ausgabeeinheit (190) ausgelegt ist, den Indikator für jede der Auswertungszielperioden auszugeben.

4. Auswertungsvorrichtung (10) nach Anspruch 1 oder 2, wobei
die Auswertungszielperiode eine einzige Auswertungszielperiode enthält,
die eine Auswertungszielperiode in mehrere Perioden unterteilt ist, und
die Ausgabeeinheit (190) ausgelegt ist, den Indikator für jede der Perioden auszugeben.

5. Auswertungsvorrichtung (10) nach einem der Ansprüche 1 bis 4, wobei
die Umgebungsdatenbeschaffungseinheit (100) ausgelegt ist, Daten, die eine Au-ßenluftbedingung angeben, als die Umgebungsdaten zu beschaffen.

6. Auswertungsvorrichtung (10) nach einem der Ansprüche 1 bis 5, wobei
die Umgebungsdatenbeschaffungseinheit (100) ausgelegt ist, Daten, die einen Betriebszustand in einer Fabrik, die die Ausrüstung (200) aufweist, angeben, als die Umgebungsdaten zu beschaffen.

7. Auswertungsvorrichtung (10) nach einem der Ansprüche 1 bis 6, wobei
die Leistungsdatenbeschaffungseinheit (110) ausgelegt ist, Daten, die eine Nutzungsmenge von Kraftstoff in der Ausrüstung (200) und/oder einen Energieverbrauch in der Ausrüstung (200) angeben, als die Leistungsdaten zu beschaffen.

8. Auswertungsverfahren, das aufweist:
Beschaffen von Umgebungsdaten, die eine Betriebsumgebung einer Ausrüstung (200) angeben;
Beschaffen von Leistungsdaten, die eine Betriebsleistung der Ausrüstung (200) angeben;
Empfangen von Informationen zum Spezifizieren einer Lernzielperiode, die eine vergangene Periode zum Lernen einer Beziehung zwischen der Betriebsumgebung und der Betriebsleistung der vergangenen Periode ist, und einer Auswertungszielperiode, die eine Zielperiode zum Auswerten der Betriebsleistung der Ausrüstung (200) in der Auswertungszielperiode ist;
Vorverarbeiten der beschafften Umgebungsdaten und Leistungsdaten;
Erzeugen eines Lernmodells, wobei das Lernmodell ein Modell ist, das unter Verwendung der vorverarbeiteten Umgebungsdaten und Leistungsdaten in der Lernzielperiode als Lerndaten maschinengelernt wird, um eine Betriebsleistung entsprechend der Betriebsumgebung in der Lernzielperiode auszugeben;
Speichern des Lernmodells in Zuordnung zu jeder Lernzielperiode;
Empfangen eines gespeicherten spezifizierten Lernmodells entsprechend dem spezifizierten Lernziel;
Schätzen einer geschätzten Betriebsleistung der Ausrüstung (200) in der spezifizierten Lernzielperiode auf der Grundlage eines Betriebs der Ausrüstung (200) in der Lernzielperiode, wobei die geschätzte Betriebsleistung durch Verwenden eines Wertes erhalten wird, der von dem spezifizierten Lernmodell als Antwort auf eine Eingabe der vorverarbeiteten Umgebungsdaten, die der spezifizierten Auswertungszielperiode entsprechen, in das spezifizierte Lernmodell als ein geschätzter Wert der Betriebsleistung ausgegeben wird;
Berechnen eines Indikators auf der Grundlage der empfangenen vorverarbeiteten Leistungsdaten unter Verwendung des geschätzten Wertes der Betriebsleistung als eine Referenz; und
Ausgeben des Indikators als ein Auswertungsergebnis der Betriebsleistung der Ausrüstung (200) in der Auswertungszielperiode im Vergleich zu der geschätzten Betriebsleistung der Ausrüstung (200) in der vergangenen Periode unter derselben Betriebsumgebung.

9. Auswertungsprogramm, das, wenn es von einem Computer ausgeführt wird, bewirkt, dass der Computer dient als:
eine Umgebungsdatenbeschaffungseinheit (100), die ausgelegt ist, Umgebungsdaten, die eine Betriebsumgebung einer Ausrüstung (200) angeben, zu beschaffen;
eine Leistungsdatenbeschaffungseinheit (110), die ausgelegt ist, Leistungsdaten, die eine Betriebsleistung der Ausrüstung (200) angeben, zu beschaffen;
eine Eingabeeinheit (130), die ausgelegt ist, Informationen zum Spezifizieren einer Lernzielperiode, die eine vergangene Periode zum Lernen einer Beziehung zwischen der Betriebsumgebung und der Betriebsleistung der vergangenen Periode ist, und eine Auswertungszielperiode, die eine Zielperiode zum Auswerten der Betriebsleistung der Ausrüstung (200) in der Auswertungszielperiode ist, zu empfangen;
eine Vorverarbeitungseinheit (140), die eine Vorverarbeitung der beschafften Umgebungsdaten und Leistungsdaten durchführt;
eine Lerneinheit (150), die ausgelegt ist, ein Lernmodell zu erzeugen, wobei das Lernmodell ein Modell ist, das unter Verwendung der Umgebungsdaten und der Leistungsdaten in der Lernzielperiode, die durch die Vorverarbeitungseinheit (140) vorverarbeitet sind, als Lerndaten maschinengelernt ist, um eine Betriebsleistung entsprechend der Betriebsumgebung der Lernzielperiode auszugeben;
eine Lernmodellspeichereinheit (160), die ausgelegt ist, das Lernmodell in Zuordnung zu jeder Lernzielperiode zu speichern;
eine Schätzeinheit (170), die ausgelegt ist,
die vorverarbeiteten Umgebungsdaten entsprechend der spezifizierten Auswertungszielperiode von der Vorverarbeitungseinheit (140) zu empfangen,
ein spezifiziertes Lernmodell entsprechend der spezifizierten Lernzielperiode von der Lernmodellspeichereinheit (160) zu empfangen; und
eine geschätzte Betriebsleistung der Ausrüstung (200) in der spezifizierten Lernzielperiode auf der Grundlage eines Betriebs der Ausrüstung (200) in der Lernzielperiode zu schätzen, wobei die geschätzte Betriebsleistung durch Verwenden eines Wertes erhalten wird, der von dem spezifizierten Lernmodell als Antwort auf eine Eingabe der vorverarbeiteten Umgebungsdaten, die der spezifizierten Auswertungszielperiode entsprechen, in das spezifizierte Lernmodell als ein geschätzter Wert der Betriebsleistung ausgegeben wird;
eine Auswertungseinheit (180), die ausgelegt ist,
den geschätzten Wert der Betriebsleistung der Ausrüstung (200) von der Schätzeinheit (170) zu empfangen,
die vorverarbeiteten Leistungsdaten, die der spezifizierten Auswertungszielperiode entsprechen, von der Vorverarbeitungseinheit (140) zu empfangen, und
einen Indikator auf der Grundlage der empfangenen vorverarbeiteten Leistungsdaten unter Verwendung des geschätzten Wertes der Betriebsleistung als eine Referenz zu berechnen; und
eine Ausgabeeinheit (190), die ausgelegt ist, den Indikator als ein Auswertungsergebnis der Betriebsleistung der Ausrüstung (200) in der Auswertungszielperiode im Vergleich zu der geschätzten Betriebsleistung der Ausrüstung (200) in der vergangenen Periode unter derselben Betriebsumgebung auszugeben.

10. Steuerungsvorrichtung (500), die aufweist:
die Umgebungsdatenbeschaffungseinheit (100), die Leistungsdatenbeschaffungseinheit (110), die Eingabeeinheit (130), die Vorverarbeitungseinheit (140), die Lerneinheit (150), die Lernmodellspeichereinheit (160), die Schätzeinheit (170), die Auswertungseinheit (180) und die Ausgabeeinheit (190) der Auswertungsvorrichtung (10) nach Anspruch 1; und
eine Steuerungseinheit (520), die ausgelegt ist, die Ausrüstung (200) auf der Grundlage des Indikators zu steuern.

11. Steuerungsvorrichtung (500) nach Anspruch 10, wobei
die Steuerungseinheit (520) ausgelegt ist, die Ausrüstung (200) auf der Grundlage einer Ausgabe eines Steuerungsmodells zu steuern, das maschinengelernt ist, um eine Stellgröße, die für die Ausrüstung (200) bereitzustellen ist, unter Verwendung des Indikators auszugeben.

12. Steuerungsvorrichtung (500) nach Anspruch 11, wobei
die Auswertungseinheit (180) ausgelegt ist, den Indikator durch Teilen des geschätzten Wertes der Betriebsleistung durch einen tatsächlich gemessenen Wert der Betriebsleistung zu berechnen, und
die Steuerungseinheit (520) ausgelegt ist, das Steuerungsmodell mittels Durchführung eines Verstärkungslernens zu erzeugen, so dass eine Stellgröße, deren Belohnung einschließlich des Indikators als mindestens einen Teil größer ist, als eine mehr zu empfehlende Stellgröße ausgegeben wird.

13. Computerlesbares Aufzeichnungsmedium, das das Programm nach Anspruch 9 speichert.

## Revendications

1. Appareil d'évaluation (10), comprenant :
une unité d'acquisition de données environnementales (100) configurée pour acquérir des données environnementales indiquant un environnement opérationnel d'un équipement (200) ;
une unité d'acquisition de données de performance (110) configurée pour acquérir des données de performance indiquant une performance opérationnelle de l'équipement (200) ;
une unité d'entrée (130) configurée pour recevoir des informations spécifiant une période cible d'apprentissage, qui est une période passée, pour apprendre une relation entre l'environnement opérationnel et la performance opérationnelle de la période passée, et une période cible d'évaluation, qui est une période cible pour évaluer la performance opérationnelle de l'équipement (200) dans la période cible d'évaluation ;
une unité de prétraitement (140) effectuant un prétraitement des données environnementales et des données de performances acquises ;
une unité d'apprentissage (150) configurée pour générer un modèle d'apprentissage, dans lequel le modèle d'apprentissage est un modèle appris par machine utilisant, en tant que données d'apprentissage, les données environnementales et les données de performance dans la période cible d'apprentissage prétraitées par l'unité de prétraitement (140), de manière à délivrer en sortie une performance opérationnelle correspondant à l'environnement opérationnel dans la période cible d'apprentissage ;
une unité de stockage de modèle d'apprentissage (160) configurée pour stocker le modèle d'apprentissage en association avec chaque période cible d'apprentissage ;
une unité d'estimation (170) configurée pour
recevoir les données environnementales prétraitées correspondant à la période cible d'évaluation spécifiée à partir de l'unité de prétraitement (140),
recevoir un modèle d'apprentissage spécifié correspondant à la période cible d'apprentissage spécifiée à partir de l'unité de stockage de modèle d'apprentissage (160) ; et
estimer une performance opérationnelle estimée de l'équipement (200) dans la période cible d'apprentissage spécifiée sur la base d'un fonctionnement de l'équipement (200) dans la période cible d'apprentissage, dans lequel la performance opérationnelle estimée est obtenue en utilisant une valeur qui est délivrée en sortie à partir du modèle d'apprentissage spécifié en réponse à une entrée des données environnementales prétraitées correspondant à la période cible d'évaluation spécifiée dans le modèle d'apprentissage spécifié, en tant que valeur estimée de la performance opérationnelle ;
une unité d'évaluation (180) configurée pour
recevoir la valeur estimée de la performance opérationnelle de l'équipement (200) à partir de l'unité d'estimation (170),
recevoir les données de performance prétraitées correspondant à la période cible d'évaluation spécifiée à partir de l'unité de prétraitement (140), et
calculer un indicateur sur la base des données de performance prétraitées reçues en utilisant la valeur estimée de la performance opérationnelle en tant que référence ; et
une unité de sortie (190) configurée pour délivrer en sortie l'indicateur en tant que résultat d'évaluation de la performance opérationnelle de l'équipement (200) dans la période cible d'évaluation par comparaison à la performance opérationnelle estimée de l'équipement (200) dans la période passée sous le même environnement opérationnel.

2. Appareil d'évaluation (10) selon la revendication 1, dans lequel
l'unité d'apprentissage (150) est configurée, dans un cas où le modèle d'apprentissage correspondant à la période cible d'apprentissage spécifiée n'est pas stocké, pour générer le modèle d'apprentissage correspondant à la période cible d'apprentissage spécifiée en utilisant, en tant que données d'apprentissage, des données environnementales et données de performance au cours de la période cible d'apprentissage spécifiée.

3. Appareil d'évaluation (10) selon la revendication 1 ou 2, dans lequel
la période cible d'évaluation inclut une pluralité de périodes cibles d'évaluation, et
l'unité de sortie (190) est configurée pour délivrer en sortie l'indicateur dans chacune de la pluralité de périodes cibles d'évaluation.

4. Appareil d'évaluation (10) selon la revendication 1 ou 2, dans lequel
la période cible d'évaluation inclut une période cible d'évaluation,
la période cible d'évaluation est divisée en une pluralité de périodes, et
l'unité de sortie (190) est configurée pour délivrer en sortie l'indicateur dans chacune de la pluralité de périodes.

5. Appareil d'évaluation (10) selon l'une quelconque des revendications 1 à 4, dans lequel
l'unité d'acquisition de données environnementales (100) est configurée pour acquérir des données indiquant un état de l'air extérieur, en tant que données environnementales.

6. Appareil d'évaluation (10) selon l'une quelconque des revendications 1 à 5, dans lequel
l'unité d'acquisition de données environnementales (100) est configurée pour acquérir des données indiquant un état opérationnel dans une installation dotée de l'équipement (200), en tant que données environnementales.

7. Appareil d'évaluation (10) selon l'une quelconque des revendications 1 à 6, dans lequel
l'unité d'acquisition de données de performance (110) est configurée pour acquérir des données, qui indiquent au moins une quantité de combustible utilisée dans l'équipement (200) et une consommation d'énergie dans l'équipement (200), en tant que données de performance.

8. Procédé d'évaluation, comprenant :
l'acquisition de données environnementales indiquant un environnement opérationnel d'un équipement (200) ;
l'acquisition de données de performance indiquant une performance opérationnelle de l'équipement (200) ;
la réception d'informations spécifiant une période cible d'apprentissage, qui est une période passée, pour apprendre une relation entre l'environnement opérationnel et la performance opérationnelle de la période passée, et une période cible d'évaluation, qui est une période cible pour évaluer la performance opérationnelle de l'équipement (200) dans la période cible d'évaluation ;
le prétraitement des données environnementales et des données de performance acquises ;
la génération d'un modèle d'apprentissage, dans lequel le modèle d'apprentissage est un modèle appris par machine utilisant, en tant que données d'apprentissage, les données environnementales et les données de performances prétraitées dans la période cible d'apprentissage, de manière à délivrer en sortie une performance opérationnelle correspondant à l'environnement opérationnel dans la période cible d'apprentissage ;
le stockage du modèle d'apprentissage en association avec chaque période cible d'apprentissage ;
la réception d'un modèle d'apprentissage spécifié stocké correspondant à la cible d'apprentissage spécifiée ;
l'estimation d'une performance opérationnelle estimée de l'équipement (200) dans la période cible d'apprentissage spécifiée sur la base d'un fonctionnement de l'équipement (200) dans la période cible d'apprentissage, dans lequel la performance opérationnel estimée est obtenue en utilisant une valeur qui est délivrée en sortie à partir du modèle d'apprentissage spécifié en réponse à une entrée des données environnementales prétraitées correspondant à la période cible d'évaluation spécifiée dans le modèle d'apprentissage spécifié, en tant que valeur estimée de la performance opérationnelle ;
le calcul d'un indicateur sur la base des données de performance prétraitées reçues en utilisant la valeur estimée de la performance opérationnelle en tant que référence ; et
la délivrance en sortie de l'indicateur sous forme d'un résultat d'évaluation de la performance opérationnelle de l'équipement (200) dans la période cible d'évaluation par comparaison à la performance opérationnelle estimée de l'équipement (200) dans la période passée sous le même environnement opérationnel.

9. Programme d'évaluation qui, lorsqu'il est exécuté par un ordinateur, amène l'ordinateur à fonctionner comme :
une unité d'acquisition de données environnementales (100) configurée pour acquérir des données environnementales indiquant un environnement opérationnel d'un équipement (200) ;
une unité d'acquisition de données de performance (110) configurée pour acquérir des données de performance indiquant une performance opérationnelle de l'équipement (200) ;
une unité d'entrée (130) configurée pour recevoir des informations spécifiant une période cible d'apprentissage, qui est une période passée, pour apprendre une relation entre l'environnement opérationnel et la performance opérationnelle de la période passée, et une période cible d'évaluation, qui est une période cible pour évaluer la performance opérationnelle de l'équipement (200) dans la période cible d'évaluation ;
une unité de prétraitement (140) effectuant un prétraitement des données environnementales et des données de performances acquises ;
une unité d'apprentissage (150) configurée pour générer un modèle d'apprentissage, dans lequel le modèle d'apprentissage est un modèle appris par machine utilisant, en tant que données d'apprentissage, les données environnementales et les données de performance dans la période cible d'apprentissage prétraitées par l'unité de prétraitement (140), de manière à délivrer en sortie une performance opérationnelle correspondant à l'environnement opérationnel dans la période cible d'apprentissage ;
une unité de stockage de modèle d'apprentissage (160) configurée pour stocker le modèle d'apprentissage en association avec chaque période cible d'apprentissage ;
une unité d'estimation (170) configurée pour
recevoir les données environnementales prétraitées correspondant à la période cible d'évaluation spécifiée à partir de l'unité de prétraitement (140),
recevoir un modèle d'apprentissage spécifié correspondant à la période cible d'apprentissage spécifiée à partir de l'unité de stockage de modèle d'apprentissage (160) ; et
estimer une performance opérationnelle estimée de l'équipement (200) dans la période cible d'apprentissage spécifiée sur la base d'un fonctionnement de l'équipement (200) dans la période cible d'apprentissage, dans lequel la performance opérationnelle estimée est obtenue en utilisant une valeur qui est délivrée en sortie à partir du modèle d'apprentissage spécifié en réponse à une entrée des données environnementales prétraitées correspondant à la période cible d'évaluation spécifiée dans le modèle d'apprentissage spécifié, en tant que valeur estimée de la performance opérationnelle ;
une unité d'évaluation (180) configurée pour
recevoir la valeur estimée de la performance opérationnelle de l'équipement (200) à partir de l'unité d'estimation (170),
recevoir les données de performance prétraitées correspondant à la période cible d'évaluation spécifiée à partir de l'unité de prétraitement (140), et
calculer un indicateur sur la base des données de performance prétraitées reçues en utilisant la valeur estimée de la performance opérationnelle en tant que référence ; et
une unité de sortie (190) configurée pour délivrer en sortie l'indicateur en tant que résultat d'évaluation de la performance opérationnelle de l'équipement (200) dans la période cible d'évaluation par comparaison à la performance opérationnelle estimée de l'équipement (200) dans la période passée sous le même environnement opérationnel.

10. Appareil de commande (500), comprenant :
l'unité d'acquisition de données environnementales (100), l'unité d'acquisition de données de performance (110), l'unité d'entrée (130), l'unité de prétraitement (140), l'unité d'apprentissage (150), l'unité de stockage de modèle d'apprentissage (160), l'unité d'estimation (170), l'unité d'évaluation (180) et l'unité de sortie (190) de l'appareil d'évaluation (10) selon la revendication 1; et
une unité de commande (520) configurée pour commander l'équipement (200), sur la base de l'indicateur.

11. Appareil de commande (500) selon la revendication 10, dans lequel
l'unité de commande (520) est configurée pour commander l'équipement (200), sur la base d'une sortie d'un modèle de commande appris par machine de manière à délivrer en sortie une variable manipulée à fournir à l'équipement (200) à l'aide de l'indicateur.

12. Appareil de commande (500) selon la revendication 11, dans lequel
l'unité d'évaluation (180) est configurée pour calculer l'indicateur en divisant la valeur estimée de la performance opérationnelle par une valeur réellement mesurée de la performance opérationnelle, et
l'unité de commande (520) est configurée pour générer le modèle de commande en effectuant un apprentissage par renforcement de sorte qu'une variable manipulée, dont la récompense incluant l'indicateur dans la mesure où au moins une partie est plus élevée, soit émise en tant que variable manipulée plus recommandée.

13. Support d'enregistrement lisible par ordinateur stockant le programme selon la revendication 9.
